# EUROPEAN PATENT SPECIFICATION

(11) **EP 4 209 854 B1**
(45) Date of publication and mention of the grant of the patent: **21.05.2025**
(21) Application number: 22809634.3
(22) Date of filing: 29.09.2022
(51) Int. Cl.: B60W 30/18, G05D 1/00, G08G 1/01, G08G 1/052, G08G 1/056, G08G 1/16

(54) **OVERTAKING PLANNING METHOD AND APPARATUS, AND STORAGE MEDIUM**
ÜBERHOLPLANUNGSVERFAHREN UND -VORRICHTUNG SOWIE SPEICHERMEDIUM
PROCÉDÉ ET APPAREIL DE PLANIFICATION DE DÉPASSEMENT ET SUPPORT DE STOCKAGE

(30) Priority: 26.11.2021 CN 202111421424
(43) Date of publication of application: 12.07.2023
(73) Proprietor: Guangzhou Xiaopeng Autopilot Technology Co., Ltd., Guangzhou, Guangdong 510000 (CN)
(72) Inventor: HUANG, Yiwen, Guangzhou, Guangdong 510000 (CN); ZHANG, Huikang, Guangzhou, Guangdong 510000 (CN); ZHAO, Yongzheng, Guangzhou, Guangdong 510000 (CN); LI, Liyun, Guangzhou, Guangdong 510000 (CN)
(74) Representative: Ran, Handong
(86) International application number: PCT/CN2022/122699
(87) International publication number: WO 2023/093297

(56) References cited:
- EP-A1- 2 423 902
- CN-A- 106 971 624
- CN-A- 107 644 551
- CN-A- 107 644 551
- CN-A- 112 208 532
- CN-A- 113 039 110
- CN-A- 114 137 976
- US-A1- 2015 070 194
- US-A1- 2021 155 247
- US-A1- 2021 362 713

## Description

### Field of Invention

The present invention relates to the field of driving planning technology, and in particular to an overtake planning method, an apparatus, and a storage medium

### Background

As autonomous driving technology develops rapidly, the requirements for speed and distance in the autonomous driving process are becoming increasingly high. In the existing autonomous driving processes, when the vehicle generates an overtake decision and performs an overtake action, the lack of an overtake planning process leads to poor safety and comfort when the vehicle performs an overtake automatically.

US2021362713A1 discloses a vehicle speed control device mounted in a vehicle, which comprises: a forward detection unit for obtaining the amount of time until a vehicle Vb to be overtaken that is traveling to the side of a host vehicle Va, in which the vehicle speed device is mounted, is overtaken; a rearward detection unit for obtaining the amount of time until the distance between the host vehicle Va and a following vehicle Vc traveling rearward of the host vehicle Va reaches a prescribed rearward distance; and a speed control unit for increasing the speed of the host vehicle Va when the time until overtaking occurs is greater than the time until the prescribed rearward distance is reached.

CN107644551A describes an overtaking pre-judgment method comprising: acquiring a first initial distance between the head of a host vehicle and the tail of a first vehicle before a lane change, wherein the first vehicle drives in a lane where the host vehicle is located and ahead of the host vehicle along a direction the same as that of the host vehicle; calculating a first predicted distance between a target vehicle and a second vehicle after the host vehicle overtakes, wherein the target vehicle is the host vehicle or the first vehicle, and the second vehicle drives in an adjacent lane and ahead of the host vehicle; and outputting an overtaking prompt if the first initial distance is greater than or equal to a preset safety distance and the first predicted distance is greater than or equal to the preset safety distance. The method makes pre-judgment and outputs the overtaking prompt before the overtaking if the first initial distance is greater than or equal to the preset safety distance and the first predicted distance is greater than or equal to the preset safety distance, to reduce the probability of traffic accidents during the overtaking and ensure safety of the overtaking vehicle.

### Summary of Invention

The embodiments of the present invention provide an overtake planning method, an apparatus, and a storage medium, which can plan a suitable overtake distance and improve safety and comfort during overtake. Aspects of the invention are set out in the appended claims.

According to the present invention, there is provided an overtake planning method applied to a first vehicle, comprising the following steps:
acquiring a first speed of the first vehicle, a second speed of a second vehicle, and a distance between the first vehicle and the second vehicle, the second vehicle being the vehicle which the first vehicle needs to overtake;
determining a planned overtake time according to the first speed and the speed difference between the first speed and the second speed;
calculating a first overtake distance according to the distance between the first vehicle and the second vehicle, the second speed, and the planned overtake time and determining a target overtake distance according to the first overtake distance.

In an embodiment, the step of determining the planned overtake time according to the first speed and the speed difference between the first speed and the second speed includes:
determining a first time according to a speed range within which the first speed falls, wherein the speed range can be selected from a first speed range, a second speed range, and a third speed range, wherein: if the first speed is within the first speed range, the first time is determined to be a first threshold time, if the first speed is within the second speed range, the first time is determined to be negatively correlated with the first speed, and if the first speed is within the third speed range, the first time is determined to be the second threshold time;
determining a second time according to a speed difference range within which the speed difference between the first speed and the second speed falls, wherein the speed difference range can be selected from a first speed difference range, a second speed difference range, and a third speed difference range, wherein: if the speed difference between the first speed and the second speed is within the first speed difference range, the second time is determined to be the first threshold time, if the speed difference between the first speed and the second speed is within the second speed difference range, the second time is determined to be negatively correlated with the first speed difference if the speed difference between the first speed and the second speed is within the third speed difference range, the second time is determined to be the second threshold time;
setting the planned overtake time as the smaller of the first time and the second time.

In an embodiment, the first overtake distance is the sum of the second vehicle movement distance and an overtake distance, the second vehicle movement distance is the product of the planned overtake time and the second speed, and the overtaking distance is the distance between the first vehicle and the second vehicle.

In an embodiment, the step of calculating the first overtake distance according to the distance between the first vehicle and the second vehicle, the second speed, and the planned overtake time and determining the target overtake distance according to the first overtake distance includes:
calculating the first overtake distance according to the distance between the first vehicle and the second vehicle, the second speed, and the planned overtake time;
if a third vehicle is not detected, setting the first overtake distance as the target overtake distance, the third vehicle being the vehicle in front of the first vehicle after the first vehicle overtakes the second vehicle;
if a third vehicle is detected, calculating a second overtake distance according to the distance between the first vehicle and the third vehicle, the following time and the first speed;
calculating a third overtake distance according to the distance between the first vehicle and the third vehicle and the distance between the first vehicle and the second vehicle;
setting the target overtake distance as the smallest of the first overtake distance, the second overtake distance, and the third overtake distance .

In an embodiment, the step of calculating the second overtake distance according to the distance between the first vehicle and the third vehicle, the following time, and the first speed, if the third vehicle is detected, includes:
if the third vehicle is detected, acquiring a preset following time;
calculating a product of the preset following time and the first speed and setting the second overtake distance as the difference between the distance between the first vehicle and the third vehicle and the product of the preset following time and the first speed .

In an embodiment, the step of calculating the third overtake distance according to the distance between the first vehicle and the third vehicle and the distance between the first vehicle and the second vehicle includes:
acquiring preset weighing parameters including a first weight parameter and a second weighing parameter;
calculating a product of the first weighing parameter and the distance between the first vehicle and the second vehicle, calculating a product of the second weighing parameter and the distance between the first vehicle and the third vehicle, and setting the third overtake distance as a sum of two products .

According to the invention, after the step of calculating the first overtake distance according to the distance between the first vehicle and the second vehicle, the second speed, and the planned overtake time and the step of determining the target overtake distance according to the first overtake distance further includes:
determining a planned speed according to the target overtake distance and the planned overtake time;
controlling the first vehicle according to the planned speed.

The second aspect of the present invention provides an overtake planning apparatus including:
a data acquisition module for acquiring a first speed of a first vehicle, a second speed of a second vehicle, and a distance between the first vehicle and the second vehicle;
a time planning module for determining a planned overtake time according to the first speed and a speed difference between the first speed and the second speed;
a distance planning module for calculating a first overtake distance according to a distance between the first vehicle and the second vehicle, the second speed, and the planned overtake time and determining the target overtake distance according to the first overtake distance; and a speed planning module for determining the planned speed according to the target overtake distance and the planned overtake time and controlling the first vehicle according to the planned speed.

The embodiments of the present invention provide a computer-readable storage medium having stored therein a computer program that, when executed by a processor, implements a method according to the embodiments of the present invention.

Compared with the related technologies, the embodiments of the present invention have the following benefits:
a speed difference between the first speed and the second speed may be determined by acquiring the speeds of the first vehicle and the second vehicle, i.e., the first speed and the second speed, and the planned overtake time may be determined according to the speed difference. Then, a first overtake distance is calculated according to the acquired distance between the first vehicle and the second vehicle, the second speed, and the planned overtake time, and a target overtake distance may be determined according to the first overtake distance, thereby providing a reasonable target overtake distance for the first vehicle in the overtaking process. Both the speeds of the first vehicle and the second vehicle to be overtaken and the distance are taken into consideration to improve safety and comfort during overtaking.

### Brief Description of Drawings

To illustrate the technical solutions of the examples of the present invention more clearly, the accompanying drawings needed for describing the embodiments and the prior art will be explained briefly. The following accompanying drawings only describe some of the embodiments of the present invention, and those skilled in the art can obtain other drawings according to these drawings without creative labor.
Fig. 1 is a schematic diagram of an application scenario of the overtake planning method according to the embodiments of the present invention;
Fig. 2 is a schematic flowchart of an overtake planning method suitable for understanding the present invention;
Fig. 3 is a schematic diagram of the coordinate relationship between the first speed and the first time according to the embodiments of the present invention;
Fig. 4 is a schematic diagram of the coordinate relationship between the speed difference between the first vehicle and the second vehicle and the second time according to the embodiments of the present invention;
Fig. 5 is a schematic diagram of the application scenario of another overtake planning method according to the embodiments of the present invention;
Fig. 6 is a schematic flowchart of another overtake planning method according to the embodiments of the present invention;
Fig. 7 is a schematic flowchart of the calculation of the second overtake distance according to the embodiments of the present invention;
Fig. 8 is a schematic flowchart of the calculation of the third overtake distance according to the embodiments of the present invention;
Fig. 9 is a structural schematic diagram of an overtake planning apparatus suitable for understanding the present invention;
Fig. 10 is a structural schematic diagram of an overtake planning apparatus according to the embodiments of the present invention;
Fig. 11 is a structural schematic diagram of an electronic device according to the embodiments of the present invention.

### Detailed Description of the Embodiments

The following will describe the technical solutions in the embodiments of the present invention clearly and completely with reference to the accompanying drawings. The embodiments described below are only a part of the embodiments in the present invention.

It is important to note that the terms "include", "comprise", and any variants of such terms in the embodiments and the accompanying drawings aim to cover non-exclusive inclusions. For example, comprising processes, methods, systems, products, or equipment of a series of steps or units doesn't construe as limited to the listed steps or units, but optionally includes steps or units that are not listed, or optionally includes other steps or units intrinsic to these processes, methods, systems, products or equipment.

The embodiments of the present invention provide an overtake planning method, an apparatus, an electronic device, and a storage medium, which can plan a suitable overtake distance and improve safety and comfort during overtake. They will be described in detail.

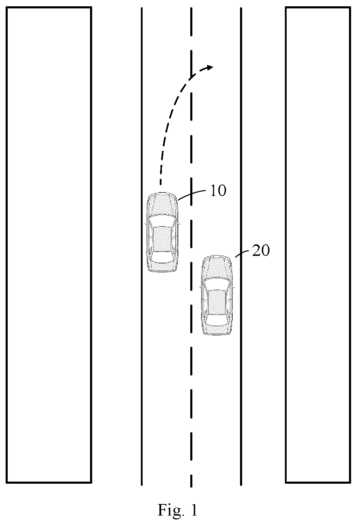

Referring to Fig. 1, Fig. 1 is a schematic diagram of an application scenario of the overtake planning method according to the embodiments of the present invention. As shown in Fig. 1, it may include the first vehicle 10, and the second vehicle 20. The first vehicle 10 may be in front of or behind the second vehicle 20, or on the left or right side of the second vehicle 20. As shown in Fig. 1, the first vehicle 10 is on the left side, and in the front of the second vehicle 20, that is, the front left side. The first vehicle 10 may include a processor and an information acquisition module, wherein the processor may include a Micro Controller Unit (MCU), an electronic device, and a computer etc., but is not limited thereto. The processor may be the control center of the first vehicle 10, which connects the parts of the entire first vehicle through various ports and wirings and executes various functions, and processes data for the first vehicle. The information acquisition module may include one or more sensors and/or satellite signal-receiving apparatus, which may be set up in different positions of the first vehicle, which are not specifically limited. The information collection module can collect one or more sensing information and/or satellite signals under the control of the processor.

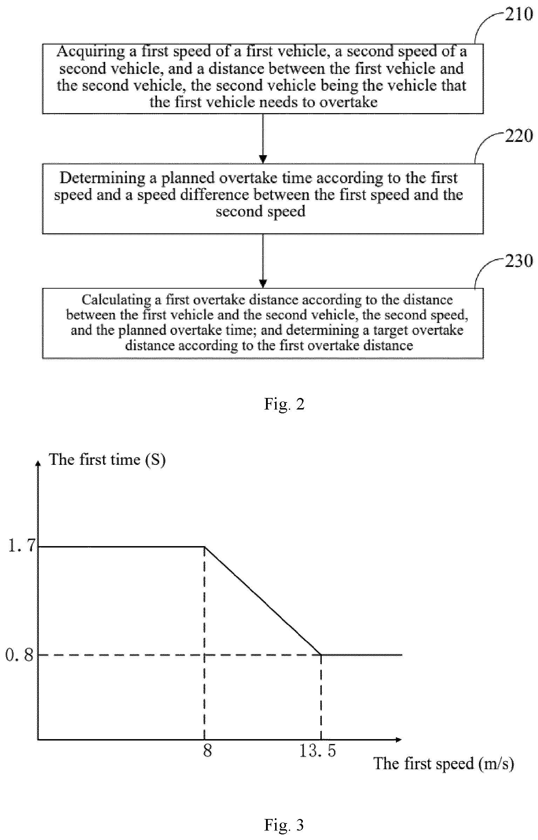

Referring to Fig. 2, Fig. 2 is a schematic flowchart of an overtake planning method suitable for understanding the present invention. The method can be applied to the first vehicle 10 as shown in Fig. 1. As shown in Fig. 2, the method includes the following steps:
step 210, acquiring a first speed of a first vehicle, a second speed of a second vehicle, and a distance between the first vehicle and the second vehicle, the second vehicle being the vehicle that the first vehicle needs to overtake.
   In an embodiment of the present invention, during the autonomous driving process, especially during the automatic driving process on urban roads, the vehicle needs to change lanes multiple times, which involves overtaking actions to pass other vehicles. To ensure safe overtaking under autonomous driving, the first vehicle needs to acquire the speed of the vehicle to be overtaken and the distance between the first vehicle and the vehicle to be overtaken, wherein the second vehicle is the vehicle to be overtaken by the first vehicle when performing the overtaking action. The first vehicle may acquire its speed and location and those of the second vehicle through a velocity sensor, a position sensor, or a satellite-receiving apparatus, etc. After acquiring the locations of the first vehicle and the second vehicle, the distance between the first vehicle and second vehicle can be determined according to the locations acquired. Or, the distance between the first vehicle and the second vehicle can be directly measured through a distance-measuring sensor or a satellite-receiving apparatus.
step 220, determining a planned overtake time according to the first speed and the speed difference between the first speed and the second speed.

In an embodiment of the present invention, to ensure the safety of the first vehicle and the second vehicle during overtaking, it is necessary to determine a timing for the first vehicle to overtake the second vehicle. To determine the timing, it is necessary to take the speed of the first vehicle and the relation between the speed of the first vehicle and that of the second vehicle. Therefore, the first vehicle may determine the planned overtake time directly according to the speed of the first vehicle, i.e., the first speed, as well as the speed difference between the first vehicle and the second vehicle, i.e., the difference between the first speed and the second speed. Specifically, the first vehicle may set a negative correlation between the first speed and the overtaking time, i.e., the greater the first speed is, the shorter the overtake time is. This is because the greater the first speed is, the shorter the time it will take to overtake the second vehicle by a large distance. In addition, the first vehicle further sets a negative correlation between the speed difference between the first vehicle and the second vehicle and the overtake time, i.e., the greater the speed difference between the first vehicle and the second vehicle is, the shorter the overtake time is. This is because the greater the speed difference between the first vehicle and the second vehicle is, the shorter the time it will require to overtake the second vehicle by a large distance. At this moment, the first vehicle may determine two overtake times according to the first speed as well as the speed difference between the first vehicle and the second vehicle. In order not to make the overtaking time too long, the first vehicle may select the shorter overtake time as the planned overtake time.

In an embodiment, the step of determining the planned overtake time according to the first speed and the speed difference between the first speed and the second speed in step 220 performed by the first vehicle may include:
determining the first time according to the speed range within which the first speed falls, wherein the speed range includes the first speed range, the second speed range, and the third speed range. If the first speed is within the first speed range, the first time is determined to be the first threshold time; if the first speed is within the second speed range, the first time is determined to be negatively correlated with the first speed; and if the first speed is within the third speed range, the first time is determined to be the second threshold time;
   determining the second time according to the speed difference range within which the speed difference between the first speed and the second speed falls, wherein the speed difference range includes the first speed difference range, the second speed difference range, and the third speed difference range. If the speed difference between the first speed and the second speed is within the first speed difference range, the second time is determined to be the first threshold time; if the speed difference between the first speed and the second speed is within the second speed difference range, the second time is determined to be negatively correlated with the first speed difference; if the speed difference between the first speed and the second speed is within the third speed difference range, the second time is determined to be the second threshold time;
setting the planned overtake time as the smaller of the first time and the second time.

In an embodiment of the present invention, when the speed of the first vehicle, i.e., the first speed, is greater than a certain threshold value, if the overtake time is still determined according to the negative correlation of the first speed with the overtake time, the overtake time will be too short for the overtake to be executed. When the first speed is smaller than a certain threshold value, if the overtake time is still determined according to the negative correlation of the first speed with the overtake time, the overtake time will be too long, and under the condition of constantly changing driving environment, it is also difficult to execute overtaking. Therefore, before determining the overtake time according to the first speed, the first vehicle may preset two threshold values, and divide possible first speeds into three ranges according to the two speed thresholds. The three ranges include the first speed range, the second speed range, and the third speed range. The first vehicle may set up fixed overtake time for two of the three speed ranges. When the first speed is greater than a threshold value, that is, the first speed is in the first speed range, the overtake time is fixed as the first threshold time; when the first speed is smaller than a threshold value, that is, the first speed is in the third speed range, the overtake time is fixed as the second threshold time. However, when the first speed is in the second speed range, the overtake time can be determined according to the first speed, which is in the negative correlation thereto. The overtake time determined according to the first speed is considered as the first time. Wherein, the two speed threshold values, i.e., the first threshold time, and the second threshold time can be set up according to requirements, which may be empirical values.

For example, as shown in Fig. 3, Fig. 3 is a schematic diagram of the coordinate relationship between the first speed and the first time according to the embodiments of the present invention. The two threshold values set up for the first vehicle are 13.5m/s and 8m/s, respectively. When the first speed is greater than 13.5m/s, it is deemed as being in the first speed range; when the first speed is smaller than 8m/s, it is deemed as being in the third speed range; when the first speed is smaller than 13.5m/s and greater than 8m/s, it is deemed as being in the second speed range. In the meantime, the first threshold time and the second threshold time for the first vehicle are 0.8s and 1.7s, respectively. When the first vehicle is in the first speed range, the overtake time is 0.8s; and when the first vehicle is in the third speed range, the overtake time is 1.7s. Because two speed threshold values, the first threshold time, and the second threshold time are set up, when the first speed is in the second speed range, the slope factor of the negative correlation of the first speed with the overtake time can be learned, and then, when the first speed is in the second speed range, the overtake time can be determined according to the first speed.

In an embodiment of the present invention, similar to the first speed, when the speed difference between the first vehicle and the second vehicle is greater than a certain threshold value, if the overtake time is still determined according to the negative correlation of the speed difference between the first vehicle and the second vehicle with the overtake time, the overtake time will be too short for the overtake to be executed. When the speed difference between the first vehicle and the second vehicle is smaller than a certain threshold value if the overtake time is still determined according to the inverse correlation of the speed difference between the first vehicle and the second vehicle with the overtake time, the overtake time will be too long, and under the condition of constantly changing driving environment, it is also difficult for the overtake to be executed. Therefore, when determining the overtake time according to the speed difference between the first vehicle and the second vehicle, the first vehicle may preset two threshold values for the speed difference, which will be the basis for segmenting the possible speed difference between the first vehicle and the second vehicle into three ranges. The three ranges include the first speed difference range, the second speed difference range, and the third speed difference range. The first vehicle may set up fixed overtake time for two of the three speed difference ranges. When the first speed difference is greater than a threshold value, that is, the first speed difference is in the first speed range, the overtake time is the fixed first threshold time; when the first speed difference is smaller than a threshold value, that is, the first speed difference is in the third speed range, the overtake time is the fixed second threshold time. However, when the first speed difference is in the second speed range, the overtake time may be determined according to the speed difference between the first vehicle and the second vehicle, which is in a negative correlation therewith. The overtake time determined according to the speed difference between the first vehicle and the second vehicle is considered as the second time. Wherein, the two speed threshold values, the first threshold time, and the second threshold time can be set up according to requirements, which may be empirical values.

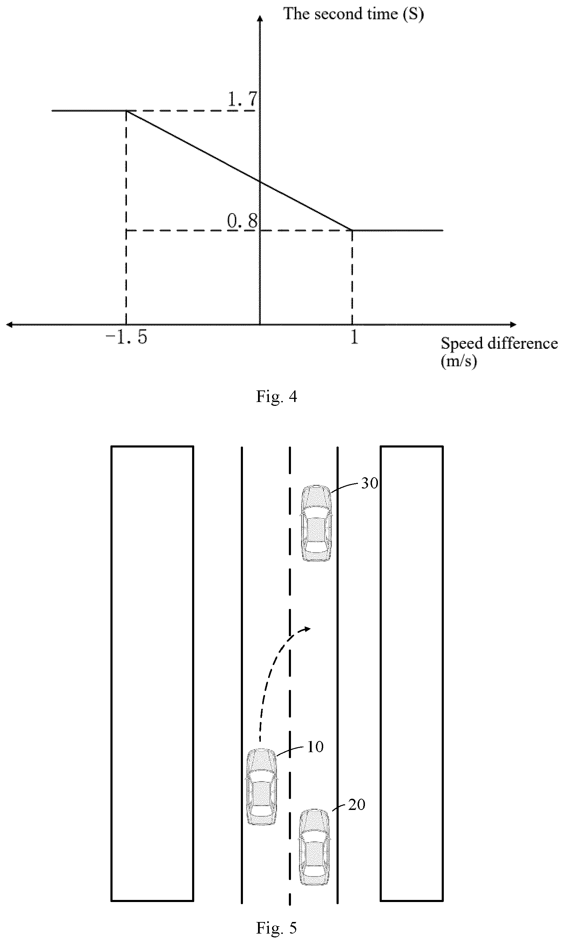

For example, as shown in Fig. 4, Fig. 4 is a schematic diagram of the coordinate relationship between the speed difference between the first vehicle and the second vehicle and the second time according to the embodiments of the present invention. The two speed difference threshold values set up for the first vehicle are 1m/s and -1.5m/s, respectively. When the speed difference between the first vehicle and the second vehicle is greater than 1m/s, it is deemed as being in the first speed difference range; when the speed difference between the first vehicle and the second vehicle is smaller than -1.5m/s, it is deemed as being in the third speed difference range; and when speed difference between the first vehicle and the second vehicle is smaller than 1m/s and greater than - 1.5m/s, it is deemed as being in the second speed difference range. In the meantime, the first threshold time and the second threshold time set up for the first vehicle are 0.8s and 1.7s, respectively. When the speed difference is in the first speed difference range, the overtake time is 0.8s; and when the speed difference is in the third speed difference range, the overtake time is 1.7s. Because two speed difference threshold values, the first threshold time, and the second threshold time are set up, when the speed difference is in the second speed difference range, the slope factor of the negative correlation of the speed difference with the overtake time can be learned, and then, when the speed difference is in the second speed difference range, the overtake time can be determined according to the speed difference between the first vehicle and the second vehicle.

After the first vehicle determines the first time according to the first speed and the second time according to the speed difference between the first vehicle and the second vehicle, it sets the planned overtake time as the smaller of the first time and the second time. The planned overtake time is a time period which is planned to be taken by the first vehicle to overtake the second vehicle.

In an embodiment of the present invention, by dividing different speed ranges and speed difference ranges, the first time and the second time are determined respectively according to the ranges within which the first speed is and the range within which speed difference between the first vehicle and the second vehicle is, then the planed overtaking time may be determined. This rationalizes the planed overtake time, and improves the achievability of the overtaking process.

Step 230, calculating the first overtake distance according to the distance between the first vehicle and the second vehicle, the second speed, and the planned overtake time and determining a target overtake distance according to the first overtake distance.

In an embodiment of the present invention, after the first vehicle determines the planned overtake time, it further plans the overtake distance. When planning the overtake distance, it needs to take the distance between the first vehicle and the second vehicle into consideration. Based on the above, it is further necessary to take the traveling distance of the second vehicle within the planned overtake time into consideration. Therefore, the first vehicle may calculate the first overtake distance according to the distance between the first vehicle and the second vehicle, the second speed, and the planned overtake time. Wherein the first overtake distance is the planned overtake distance when only the first vehicle and the second vehicle are considered during the overtake process.

After the first vehicle calculates the first overtake distance, the first overtake distance may be adjusted according to the road conditions and then sets the adjusted first overtake distance as the target overtake distance; or it may directly set the calculated first overtake distance as the target overtake distance, or after multiple calculations, the average value of the first overtake distance may be set as the target overtaking distance. Wherein the target overtake distance is the distance between the first vehicle and the second vehicle at the planned overtake time.

In an embodiment of the present invention, the first overtake distance is a sum of the second vehicle movement distance and the overtake distance, the second vehicle movement distance is the product of the planned overtake time and the second speed, and the overtake distance is a distance between the first vehicle and the second vehicle.

In an embodiment of the present invention, the first vehicle calculates the first overtake distance as the sum of the second vehicle movement distance and the overtake distance. That is, it calculates the second vehicle movement distance first, i.e., the product of the planned overtake time and the second speed, and then sets the first overtake distance as a sum of the above product and the distance between the first vehicle and the second vehicle . By setting up a calculation formula of the first overtake distance as the sum of the product of the planned overtake time and the second speed and the distance between the first vehicle and the second vehicle, the first overtake distance can be easily and directly acquired based on the foregoing parameters, thereby simplifying the planning process.

The above embodiments provide a reasonable target overtake distance for the first vehicle during overtaking and also take the speeds of the first vehicle and the second vehicle to be overtaken by the first vehicle and the distance therebetween into consideration, thereby improving safety and comfort during overtaking.

Referring to Fig. 5, Fig. 5 is a schematic diagram of the application scenario of another overtake planning method according to the embodiments of the present invention. As shown in Fig. 5, the scenario may include the first vehicle 10, the second vehicle 20, and the third vehicle 30. The first vehicle 10 may be in front of or behind the second vehicle 20, or on the left side or right side of the second vehicle 20; the first vehicle 10 is behind the third vehicle 30, or on the left side or right side of the third vehicle 30. As shown in Fig. 3, the first vehicle 10 is on the left side and in front of the second vehicle 20, i.e., the front-left side; the first vehicle 10 is on the left side and behind the third vehicle 30, i.e., left-rear side.

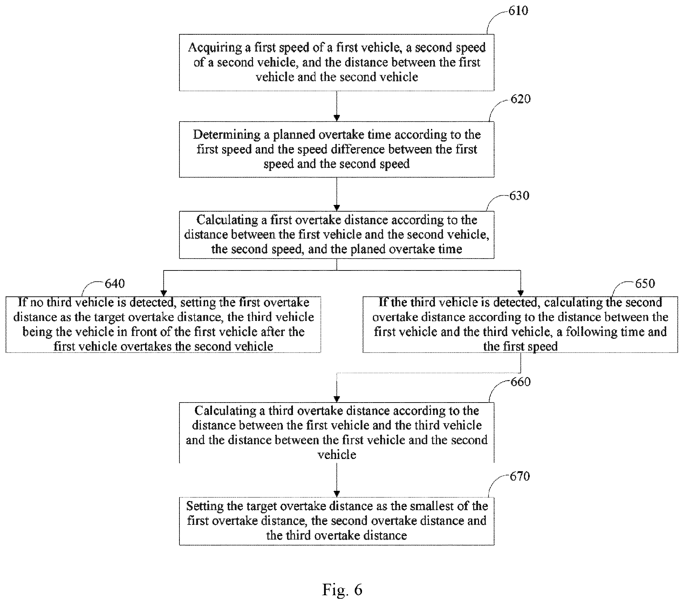

In an embodiment of the present invention, referring to Fig. 6, Fig. 6 is a schematic flowchart of another overtake planning method according to the embodiments of the present invention. The method may be applied to the first vehicle 10 in Fig. 5. As shown in Fig. 6, the method may include the following steps:
step 610, acquiring the first speed of the first vehicle, the second speed of the second vehicle, and the distance between the first vehicle and the second vehicle.
   In an embodiment of the present invention, step 610 will be performed in the same way as step 210 and will not be repeated.
Step 620, determining a planned overtake time according to the first speed and the speed difference between the first speed and the second speed.
   In an embodiment of the present invention, step 620 will be performed in the same way as step 220 and will not be repeated.
Step 630, calculating the first overtake distance according to the distance between the first vehicle and the second vehicle.
   In an embodiment of the present invention, the process of calculating the first overtake distance by the first vehicle is the same as the process of calculating the first overtake distance when performing step 230 and will not be repeated.
Step 640, if a third vehicle is not detected, setting the first overtake distance as the target overtake distance, the third vehicle being the vehicle in front of the first vehicle after the first vehicle overtakes the second vehicle.

In an embodiment of the present invention, the first vehicle, in the process of overtaking the second vehicle, may detect whether there is any vehicle in the front in the lane on which the second vehicle is traveling by means of sensors or satellite-receiving apparatus. Wherein, the vehicle within a preset range in the lane in front of the second vehicle is defined as the third vehicle, that is, the vehicle in front of the first vehicle after the first vehicle overtakes the second vehicle.

If the first vehicle doesn't detect any vehicle in the lane in front of the second vehicle, it determines that the first overtake distance calculated is the target overtake distance without considering factors such as the front vehicle, and the factors such as subsequent driving speed may be planned according to the target overtake distance, so as to complete the complete overtaking the second vehicle.

In an embodiment of the present invention, if the first vehicle doesn't detect the third vehicle within the preset range, the first overtake distance is determined as the target overtake distance.

In an embodiment of the present invention, the first vehicle may detect front vehicles within the preset range in the lane in front of the second vehicle. At this moment, the vehicle within the preset range in the lane in front of the second vehicle is the third vehicle. The preset range may be set up by the client automatically. By setting up the preset range to detect the third vehicle therein, any vehicle that may cause disturbance to the first vehicle during the overtaking process can be effectively detected. This will be used as a variable for the planning of the following overtake. However, vehicles that will not cause disturbance to the first vehicle during the overtaking process will not be considered during the overtake planning.

Step 650, if a third vehicle is detected, calculating the second overtake distance according to the distance between the first vehicle and the third vehicle, a following time and the first speed.

In an embodiment of the present invention, if the first vehicle detects the third vehicle when planning the target overtake distance, it not only considers the speed of the following vehicle, i.e., the second vehicle, and the distance between the first vehicle and the second vehicle, but also considers the distance between the front vehicle, i.e., the first vehicle, and the third vehicle. Therefore, if the first vehicle detects the third vehicle, it may acquire the location of the third vehicle by means of the velocity sensor, the position sensor, or the satellite-receiving apparatus. After acquiring the location of the third vehicle, the distance between the first vehicle and the third vehicle can be determined according to the already acquired location of the first vehicle and the just acquired location of the third vehicle. Or, the distance between the first vehicle and the third vehicle may be directly measured by means of the distance sensor or the satellite-receiving apparatus.

The first vehicle calculates the second overtake distance according to the distance between the first vehicle and the third vehicle, the following time, and the acquired first speed, wherein the second overtake distance the overtake distance determined according to the distance between the first vehicle and the third vehicle, the following time and the first speed, taking both the second vehicle and the third vehicle into consideration. The following time is the time distance between the first vehicle and the third vehicle after the first vehicle overtakes the second vehicle. The following time is an empirical value that can be set up according to actual requirements.

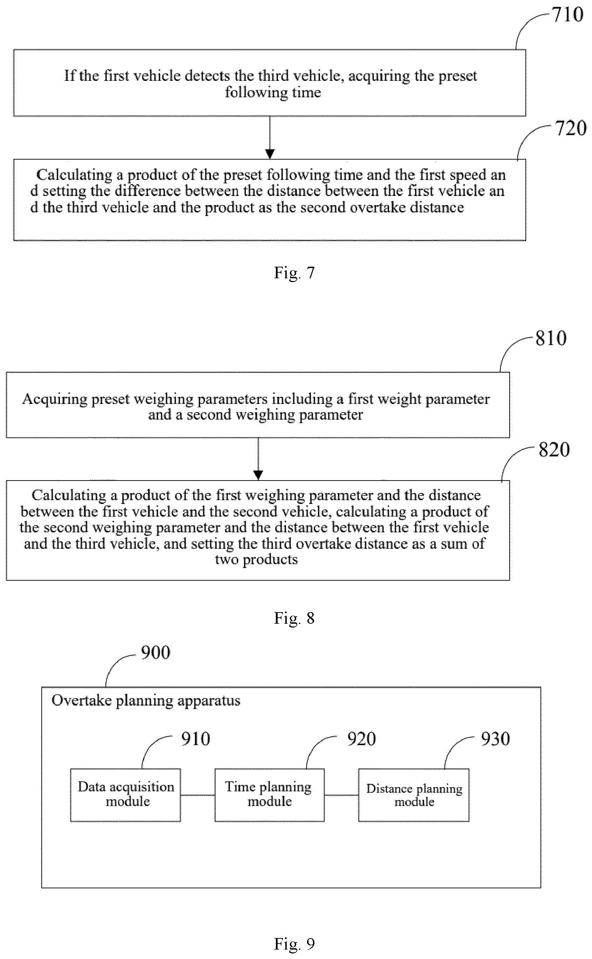

In an embodiment, referring to Fig. 7, Fig. 7 is a schematic flowchart of the calculation of the second overtake distance according to the embodiments of the present invention. Step 650 performed by the first vehicle, i.e., if the third vehicle is detected, the step of calculating the second overtake distance according to the distance between the first vehicle and the third vehicle may include:
Step 710, if the first vehicle detects the third vehicle, acquiring the preset following time;
Step 720, calculating a product of the preset following time and the first speed and setting the difference between the distance between the first vehicle and the third vehicle and the product as the second overtake distance.

In an embodiment of the present invention, after the first vehicle detects the third vehicle, it acquires the preset following time. In particular, it can maintain a car following mode after the third vehicle. At this moment, the first vehicle may obtain the following time from the local terminal or server under the car following mode, such as 0.4s, that is, the first vehicle must maintain a distance, which will take 0.4s to catch up, from the third vehicle.

After acquiring the following time, the first vehicle calculates the product of the first speed and the following time and sets the sum of the product and the distance between the first vehicle and the third vehicle as the second overtake distance. By setting up a calculation formula of the second overtake distance as the sum of the product of the following time and the first speed and the distance between the first vehicle and the third vehicle, the second overtake distance can be easily and directly acquired based on the foregoing factors, thereby simplifying the planning process.

Step 660, calculating the third overtake distance according to the distance between the first vehicle and the third vehicle and the distance between the first vehicle and the second vehicle.

In an embodiment of the present invention, the first vehicle may calculate the third overtake distance directly according to the distance between the first vehicle and the third vehicle and the distance between the first vehicle and the second vehicle. In this case, the first vehicle may not be too close to the second vehicle and the third vehicle while overtaking. The third overtake distance is an overtake distance determined according to the distance between the first vehicle and the third vehicle and the distance between the first vehicle and the second vehicle, taking both the second vehicle and the third vehicle are taken into consideration.

In an embodiment, referring to Fig. 8, Fig. 8 is a schematic flowchart of the calculation of the third overtake distance according to the embodiments of the present invention. Step 660 performed by the first vehicle, i.e., calculating the third overtake distance according to the distance between the first vehicle and the third vehicle and the distance between the first vehicle and the second vehicle, may include:
step 810, acquiring preset weighing parameters including a first weight parameter and a second weighing parameter;
step 820, calculating a product of the first weighing parameter and the distance between the first vehicle and the second vehicle, calculating a product of the second weighing parameter and the distance between the first vehicle and the third vehicle, and determining the sum of the two products as the third overtake distance.

In an embodiment, in the overtaking process, to avoid safety and comfort issues that occur when the first vehicle is too close to the second vehicle and the third vehicle, the first vehicle may preset the first weighing parameter and the second weighing parameter, calculate a product of the first weighing parameter and the distance between the first vehicle and the second vehicle and a product of the second weighing parameter and the distance between the first vehicle and the third vehicle, and set the third overtake distance as the sum of the two products , thereby selecting a suitable position on the geometric location as the third overtake distance. Therefore, the first weighing parameter and the second weighing parameter may be empirical values, for example, the first weighing parameter is 0.4 and the second weighing parameter is 0.6.

For example, the distance between the first vehicle and the second vehicle is 10m, the distance between the first vehicle and the third vehicle is 20m, the first weighing parameter acquired is 0.4, and the second weighing parameter is 0.6. the third overtake distance calculated according to the above is 10*0.4+20*0.6=16m. That is, the third overtake distance means that the first vehicle should be 16m in front of the second vehicle while overtaking.

A reasonable overtake distance can be determined between the second vehicle and the third vehicle by setting up two preset weighing parameters and considering the distance between the first vehicle and the second vehicle as well as the distance between the first vehicle and the third vehicle.

Step 670, Setting the target overtake distance as the smallest of the first overtake distance, the second overtake distance and the third overtake distance.

In an embodiment of the present invention, the first overtake distance, the second overtake distance, and the third overtake distance are all executable when there is only the second vehicle. The second overtake distance and the third overtake distance are executable when there are both the second vehicle and the third vehicle. When the third vehicle is detected, the smallest value amongst the three overtake distances is selected as the target overtake distance, so that when the second vehicle and the third vehicle are present at the same time, when overtaking is performed according to the determined target overtake distance, the first vehicle will not cause too much stress to the second vehicle (forcing the second vehicle to brake), and at the same time maintain a safe distance from the third vehicle. Both safety and comfort are considered.

In an embodiment, after step 230 performed by the first vehicle, i.e., calculating the first overtake distance according to the distance between the first vehicle and the second vehicle, the second speed, and the planned overtake time and determining a target overtake distance according to the first overtake distance, the first vehicle further performs the following steps:
determining the planned speed according to the target overtake distance and the planned overtake time;
controlling the first vehicle based on the planned speed.

In an embodiment of the present invention, after the first vehicle determines the planned overtake time and the target overtake distance, it further determines the planned speed required according to the target overtake distance and the planned overtake time needed to reach the target overtake distance. The planned speed is transmitted to the speed control module for speed control in the first vehicle to control the first vehicle in completing overtaking the second vehicle. The factors of the first vehicle can be directly obtained by determining the planned speed according to the target overtake distance and the planned overtake time, thereby directly controlling the first vehicle to complete overtaking.

Referring to Fig. 9, Fig. 9 is a structural schematic diagram of an overtake planning apparatus suitable for understanding the present invention. The overtake planning apparatus can be applied in an electronic device, such as the electronic device for driving the vehicle, which will not be limited herein. As shown in Fig. 9, the overtake planning apparatus 900 includes: a data acquisition module 910, a time planning module 920, and a distance planning module 930.

The data acquisition module 910 for acquiring the first speed of the first vehicle, the second speed of the second vehicle, and the distance between the first vehicle and the second vehicle.

The time planning module 920 for determining the planned overtake time according to the first speed and the speed difference between the first speed and the second speed.

The distance planning module 930 for calculating the first overtake distance according to the distance between the first vehicle and the second vehicle, the second speed, and the planned overtake time and determining the target overtake distance according to the first overtake distance.

In an embodiment, the time planning module 920 is further for:
determining the first time according to the speed range within which the first speed falls, wherein the speed range may include the first speed range, the second speed range, and the third speed range. If the first speed is in the first speed range, the first time is determined to be the first threshold time, if the first speed is in the second speed range, the first time is determined to be negatively correlated with the first speed, and if the first speed is in the third speed range, the first time is determined to be the second threshold time;
determining the second time according to the speed difference range between the first speed and the second speed, wherein the speed difference range may include the first speed difference range, the second speed difference range, and the third speed difference range. If the speed difference between the first speed and the second speed is in the first speed difference range, the second time is determined to be the first threshold time, if the speed difference between the first speed and the second speed is in the second speed difference range, the second time is determined to be negatively correlated with the first speed, and if the speed difference between the first speed and the second speed is in the third speed difference range, the second time is determined to be the second threshold time;
setting the smaller value between the first time and the second time as the planned overtake time.

In an embodiment, the first overtake distance is the sum of the second vehicle movement distance and the overtake distance. The second vehicle movement distance is the product of the planned overtake time and the second speed, and the overtake distance is the distance between the first vehicle and the second vehicle.

In an embodiment, the distance planning module 930 is further for:
calculating the first overtake distance according to the distance between the first vehicle and the second vehicle, the second speed, and the planned overtake time;
if no third vehicle is detected, setting the first overtake distance as the target overtake distance, the third vehicle being the vehicle in front of the first vehicle after the first vehicle overtakes the second vehicle;
if the third vehicle is detected, calculating the second overtake distance according to the distance between the first vehicle and the third vehicle, the following time, and the first speed;
calculating the third overtake distance according to the distance between the first vehicle and the third vehicle and the distance between the first vehicle and the second vehicle;
setting the target overtake distance as the smallest of the first overtake distance, the second overtake distance and the third overtake distance.

In an embodiment, the distance planning module 930 is further applied in:
if the third vehicle is detected, acquiring the preset following time;
calculating a product of the preset following time and the first speed and setting the difference between the distance between the first vehicle and the third vehicle and the product as the second overtake distance.

In an embodiment, the distance planning module 930 is further applied in::
acquiring preset weighing parameters including a first weight parameter and a second weighing parameter;
calculating a product of the first weighing parameter and the distance between the first vehicle and the second vehicle, calculating a product of the second weighing parameter and the distance between the first vehicle and the third vehicle, and determining the sum of the two products as the third overtake distance.

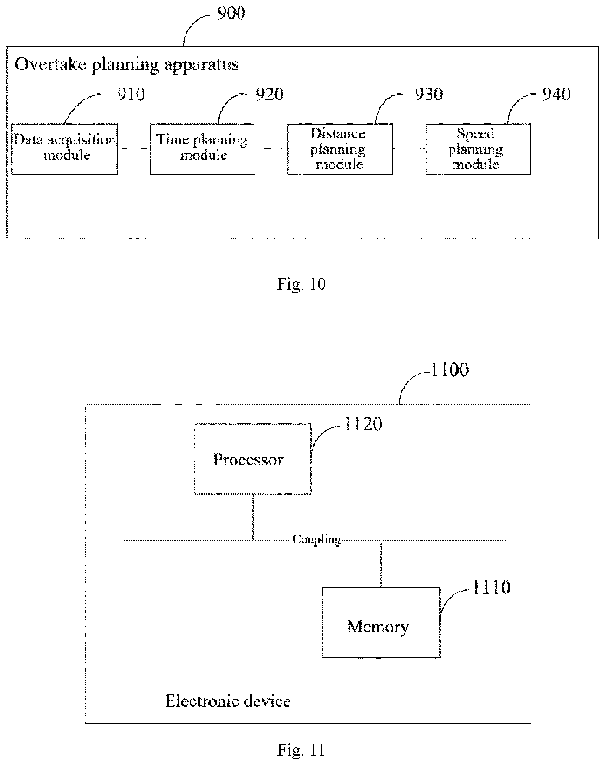

Referring to Fig. 10, Fig. 10 is a structural schematic diagram of an overtake planning apparatus according to the embodiments of the present invention. The overtake planning apparatus as shown in Fig. 10 is an improved version of that as shown in Fig. 9. As compared with the overtake planning apparatus in Fig. 9, the overtake planning apparatus 900 according to Fig. 10 includes:
a speed planning module 940 for determining the planned speed according to the target overtake distance and the planned overtake time; controlling the first vehicle according to the planned speed.

Referring to Fig. 11, Fig. 11 is a structural schematic diagram of an electronic device according to the embodiments of the present invention. The electronic device may be applied in driving the vehicle and is not limited herein. As shown in Fig. 11, the electronic device 1100 may include:
a memory 1110 storing executable program code;
a processor 1120 coupled with the memory 1110;
wherein the processor 1120 calls the executable program code stored in memory 1110 and executes any overtake planning method according to the embodiments of the present invention.

It should be noted that the electronic device as shown in Fig. 11 may further include elements that are not illustrated, such as power source, input keys, camera, speaker, screen, RF circuit, WI-FI module, blue tooth module, etc., which will not be described.

The embodiments of the present invention provide a computer-readable storage medium storing computer program, wherein the computer executes any overtake planning method according to the embodiments of the present invention by running the computer program.

The embodiments of the present invention provide a computer program product, including the non-instantaneous computer-readable storage medium storing the computer program that enables the computer to execute any overtake planning method according to the embodiments of the present invention.

Understandably, "an embodiment" mentioned throughout the entire specification means specific features, structures, or characteristics related to the embodiment are included in at least one embodiment of the present invention. Therefore, the "an embodiment" that appeared throughout the entire specification does not necessarily refer to the same embodiment. In addition, these specific features, structures, or characteristics can be combined in any suitable manner in one or more embodiments. Those skilled in the art should be aware that the embodiments described herein are optional and the actions and modules involved may not be required in this invention.

In the embodiments of the present invention, it should be understood that the serial numbers do not indicate a fixed execution sequence of the steps. The execution sequence of the processes is determined according to their functions and internal logic, which should not be construed as limiting to the implementation of the embodiments of the present invention.

The units illustrated as separate parts may or may not be physically separated, or the parts displayed as units may or may not be physical units. That is, the units can be located in one place, or distributed throughout a plurality of network elements. The embodiments of the present invention can be implemented using part or all of the units.

In addition, the functional units according to the embodiments of the present invention can be integrated into one processing unit, exist as separate physical units, or be integrated into one unit by two or more of the units. The integrated unit can be implemented in the form of a hardware or a software functional unit.

If the integrated unit is implemented as a software functional unit and sold or used as an independent product, it can be stored in a computer-readable storage medium. Given the foregoing, the fundamental, or the part that contributes to the prior art, or all or part of the technical solutions of the present invention can be implemented as a software product. The software product is stored in a storage medium and includes a variety of instructions that enable the computer (which can be a PC, a server, or a network device) to execute the steps of the method according to the embodiments of the present invention.

Ordinary persons skilled in the art should understand that all or part of the steps of the methods according to the foregoing embodiments can be completed by related hardware under the instructions of the program stored in the computer-readable storage medium. The storage medium may be selected from a read-only memory (ROM), a random-access memory (RAM), a programmable read-only memory (PROM), an erasable programmable read-only memory (EPROM), a one-time programmable read-only memory (OTPROM), an electrically erasable programmable read-only memory (EEPROM), a compact disc read-only memory (CD-ROM) or other optical disc memory, a magnetic disc memory, a cassette memory, or any other computer-readable media that can carry or store data.

## Claims

1. An overtake planning method applied to a first vehicle (10), comprising the following steps:
acquiring a first speed of the first vehicle (10), a second speed of a second vehicle (20), and a distance between the first vehicle (10) and the second vehicle (20) (210, 610), the second vehicle (20) being the vehicle which the first vehicle (10) needs to overtake;
**characterized by**
determining a planned overtake time according to the first speed and a speed difference between the first speed and the second speed (220, 620);
calculating a first overtake distance according to the distance between the first vehicle (10) and the second vehicle (20), the second speed, and the planned overtake time (230, 630);
determining a target overtake distance according to the first overtake distance (230);
determining a planned speed according to the target overtake distance and the planned overtake time; and
controlling the first vehicle (10) according to the planned speed.

2. The method according to claim 1, wherein the step of determining the planned overtake time according to the first speed and the speed difference between the first speed and the second speed (220, 620) comprises:
determining a first time according to a speed range within which the first speed falls, wherein the speed range comprises a first speed range, a second speed range, and a third speed range, wherein:
if the first speed is within the first speed range, the first time is determined to be a first threshold time,
if the first speed is within the second speed range, the first time is determined to be negatively correlated with the first speed,
if the first speed is within the third speed range, the first time is determined to be a second threshold time;
determining a second time according to a speed difference range within which the speed difference between the first speed and the second speed falls, wherein the speed difference range comprises a first speed difference range, a second speed difference range, and a third speed difference range, wherein:
if the speed difference between the first speed and the second speed is within the first speed difference range, the second time is determined to be the first threshold time,
if the speed difference between the first speed and the second speed is within the second speed difference range, the second time is determined to be negatively correlated with the first speed difference,
if the speed difference between the first speed and the second speed is within the third speed difference range, the second time is determined to be the second threshold time; and
setting the planned overtake time as the smaller of the first time and the second time.

3. The method according to claim 1, wherein the first overtake distance is a sum of a second vehicle (20) movement distance and an overtaking distance, the second vehicle (20) movement distance is the product of the planned overtake time and the second speed, and the overtake distance is a distance between the first vehicle (10) and the second vehicle (20).

4. The method according to claim 1, wherein the step of determining the target overtake distance according to the first overtake distance (230) comprises:
if a third vehicle (30) is detected, calculating a second overtake distance according to a distance between the first vehicle (10) and the third vehicle (30), a following time and the first speed (650), the third vehicle (30) being a vehicle in front of the first vehicle (10) after the first vehicle (10) overtakes the second vehicle (20) (640);
if a third vehicle (30) is not detected, setting the first overtake distance as the target overtake distance;
calculating a third overtake distance according to the distance between the first vehicle (10) and the third vehicle (30) and the distance between the first vehicle (10) and the second vehicle (20) (660); and
setting the target overtake distance as the smallest of the first overtake distance, the second overtake distance and the third overtake distance (670).

5. The method according to claim 4, wherein the step of calculating the second overtake distance according to the distance between the first vehicle (10) and the third vehicle (30), the following time, and the first speed if the third vehicle (30) is detected (650) comprises:
if the third vehicle is detected, acquiring a preset following time (710);
calculating a product of the preset following time and the first speed; and
setting the second overtake distance as the difference between the distance between the first vehicle (10) and the third vehicle (30) and the product of the preset following time and the first speed (720).

6. The method according to claim 4, wherein the step of calculating the third overtake distance according to the distance between the first vehicle (10) and the third vehicle (30) and the distance between the first vehicle (10) and the second vehicle (20) comprises:
acquiring preset weighing parameters comprising a first weight parameter and a second weighing parameter (810); and
calculating a product of the first weighing parameter and the distance between the first vehicle (10) and the second vehicle (20), calculating a product of the second weighing parameter and the distance between the first vehicle (10) and the third vehicle (30), and setting the third overtake distance as a sum of two products (820).

7. An overtake planning apparatus (900), wherein the apparatus (900) comprises:
a data acquisition module (910) for acquiring a first speed of a first vehicle (10), a second speed of a second vehicle (20), and a distance between the first vehicle (10) and the second vehicle (20) (210, 610);
**characterized by**
a time planning module (920) for determining a planned overtake time according to the first speed and a speed difference between the first speed and the second speed (220, 620);
a distance planning module (930) for calculating a first overtake distance according to a distance between the first vehicle (10) and the second vehicle (20), the second speed, and the planned overtake time (630) and determining a target overtake distance according to the first overtake distance (230); and
a speed planning module (940) for determining the planned speed according to the target overtake distance and the planned overtake time and controlling the first vehicle according to the planned speed.

8. A computer-readable storage medium having stored therein a computer program comprising instructions that, when the program is executed by a processor, cause the processor to implement the method according to any of claims 1 to 6.

## Patentansprüche

1. Überholplanungsverfahren, das bei einem ersten Fahrzeug (10) angewendet wird und folgende Schritte umfasst:
Erfassen einer ersten Geschwindigkeit des ersten Fahrzeugs (10), einer zweiten Geschwindigkeit eines zweiten Fahrzeugs (20) und eines Abstands zwischen dem ersten Fahrzeug (10) und dem zweiten Fahrzeug (20) (210, 610), wobei es sich bei dem zweiten Fahrzeug (20) um das Fahrzeug handelt, das von dem ersten Fahrzeug (10) überholt werden soll,
**gekennzeichnet durch**
Bestimmen einer geplanten Überholdauer entsprechend der ersten Geschwindigkeit und einer Geschwindigkeitsdifferenz zwischen der ersten und der zweiten Geschwindigkeit (220, 620), Berechnen einer ersten Überholstrecke entsprechend dem Abstand zwischen dem ersten Fahrzeug (10) und dem zweiten Fahrzeug (20), der zweiten Geschwindigkeit und der geplanten Überholdauer (230, 630),
Bestimmen einer Soll-Überholstrecke entsprechend der ersten Überholstrecke (230),
Bestimmen einer geplanten Geschwindigkeit entsprechend der Soll-Überholstrecke und der geplanten Überholdauer und
Steuern des ersten Fahrzeugs (10) entsprechend der geplanten Geschwindigkeit.

2. Verfahren nach Anspruch 1, wobei das Bestimmen der geplanten Überholdauer entsprechend der ersten Geschwindigkeit und der Geschwindigkeitsdifferenz zwischen der ersten und der zweiten Geschwindigkeit (220, 620) Folgendes umfasst:
Bestimmen einer ersten Dauer entsprechend einem Geschwindigkeitsbereich, in den die erste Geschwindigkeit fällt, wobei der Geschwindigkeitsbereich einen ersten, einen zweiten und
einen dritten Geschwindigkeitsbereich umfasst, wobei:
wenn die erste Geschwindigkeit im ersten Geschwindigkeitsbereich liegt, bestimmt wird, dass es sich bei der ersten Dauer um eine erste Schwellendauer handelt,
wenn die erste Geschwindigkeit im zweiten Geschwindigkeitsbereich liegt, bestimmt wird, dass die erste Dauer mit der ersten Geschwindigkeit negativ korreliert,
wenn die erste Geschwindigkeit im dritten Geschwindigkeitsbereich liegt, bestimmt wird, dass es sich bei der ersten Dauer um eine zweite Schwellendauer handelt,
Bestimmen einer zweiten Dauer entsprechend einem Geschwindigkeitsdifferenzbereich, in den die Geschwindigkeitsdifferenz zwischen der ersten und der zweiten Geschwindigkeit fällt, wobei der Geschwindigkeitsdifferenzbereich einen ersten, einen zweiten und einen dritten Geschwindigkeitsdifferenzbereich umfasst, wobei:
wenn die Geschwindigkeitsdifferenz zwischen der ersten und der zweiten Geschwindigkeit im ersten Geschwindigkeitsdifferenzbereich liegt, bestimmt wird, dass es sich bei der zweiten Dauer um die erste Schwellendauer handelt,
wenn die Geschwindigkeitsdifferenz zwischen der ersten und der zweiten Geschwindigkeit im zweiten Geschwindigkeitsdifferenzbereich liegt, bestimmt wird, dass die zweite Dauer mit der ersten Geschwindigkeitsdifferenz negativ korreliert,
wenn die Geschwindigkeitsdifferenz zwischen der ersten und der zweiten Geschwindigkeit im dritten Geschwindigkeitsdifferenzbereich liegt, bestimmt wird, dass es sich bei der zweiten Dauer um die zweite Schwellendauer handelt, und
Einstellen der geplanten Überholdauer als die kürzere unter der ersten und der zweiten Dauer.

3. Verfahren nach Anspruch 1, wobei die erste Überholstrecke eine Summe aus einer Fahrstrecke des zweiten Fahrzeugs (20) und einer Überholstrecke, die Fahrstrecke des zweiten Fahrzeugs (20) das Produkt aus der geplanten Überholdauer und der zweiten Geschwindigkeit und die Überholstrecke ein Abstand zwischen dem ersten Fahrzeug (10) und dem zweiten Fahrzeug (20) ist.

4. Verfahren nach Anspruch 1, wobei das Bestimmen der Soll-Überholstrecke entsprechend der ersten Überholstrecke (230) Folgendes umfasst:
wenn ein drittes Fahrzeug (30) erkannt wird, Berechnen einer zweiten Überholstrecke entsprechend einem Abstand zwischen dem ersten Fahrzeug (10) und dem dritten Fahrzeug (30), einem Zeitabstand und der ersten Geschwindigkeit (650), wobei es sich bei dem dritten Fahrzeug (30) um ein Fahrzeug handelt, das sich vor dem ersten Fahrzeug (10) befindet, wenn das erste Fahrzeug (10) das zweite Fahrzeug (20) überholt hat (640),
wenn kein drittes Fahrzeug (30) erkannt wird, Einstellen der ersten Überholstrecke als Soll-Überholstrecke,
Berechnen einer dritten Überholstrecke entsprechend dem Abstand zwischen dem ersten Fahrzeug (10) und dem dritten Fahrzeug (30) und dem Abstand zwischen dem ersten Fahrzeug (10) und dem zweiten Fahrzeug (20) (660) und
Einstellen der Soll-Überholstrecke als der kürzesten unter der ersten, der zweiten und der dritten Überholstrecke (670).

5. Verfahren nach Anspruch 4, wobei das Berechnen der zweiten Überholstrecke entsprechend dem Abstand zwischen dem ersten Fahrzeug (10) und dem dritten Fahrzeug (30), dem Zeitabstand und der ersten Geschwindigkeit, wenn das dritte Fahrzeug (30) erkannt wird (650), Folgendes umfasst:
Erfassen eines voreingestellten Zeitabstands (710), wenn das dritte Fahrzeug erkannt wird,
Berechnen eines Produkts aus dem voreingestellten Zeitabstand und der ersten Geschwindigkeit und
Einstellen der zweiten Überholstrecke als Differenz zwischen dem Abstand zwischen dem ersten Fahrzeug (10) und dem dritten Fahrzeug (30) und dem Produkt aus dem voreingestellten Zeitabstand und der ersten Geschwindigkeit (720).

6. Verfahren nach Anspruch 4, wobei das Berechnen der dritten Überholstrecke entsprechend dem Abstand zwischen dem ersten Fahrzeug (10) und dem dritten Fahrzeug (30) und dem Abstand zwischen dem ersten Fahrzeug (10) und dem zweiten Fahrzeug (20) Folgendes umfasst:
Erfassen von voreingestellten Gewichtungsparametern, die einen ersten Gewichtungsparameter und einen zweiten Gewichtungsparameter umfassen (810), und
Berechnen eines Produkts aus dem ersten Gewichtungsparameter und dem Abstand zwischen dem ersten Fahrzeug (10) und dem zweiten Fahrzeug (20), Berechnen eines Produkts aus dem zweiten Gewichtungsparameter und dem Abstand zwischen dem ersten Fahrzeug (10) und dem dritten Fahrzeug (30) und Einstellen der dritten Überholstrecke als Summe aus zwei Produkten (820).

7. Überholplanungsvorrichtung (900), wobei die Vorrichtung (900) Folgendes umfasst:
ein Datenerfassungsmodul (910) zum Erfassen einer ersten Geschwindigkeit eines ersten Fahrzeugs (10), einer zweiten Geschwindigkeit eines zweiten Fahrzeugs (20) und eines Abstands zwischen dem ersten Fahrzeug (10) und dem zweiten Fahrzeug (20) (210, 610),
**gekennzeichnet durch**
ein Zeitplanungsmodul (920) zum Bestimmen einer geplanten Überholdauer entsprechend der ersten Geschwindigkeit und einer Geschwindigkeitsdifferenz zwischen der ersten und der zweiten Geschwindigkeit (220, 620),
ein Streckenplanungsmodul (930) zum Berechnen einer ersten Überholstrecke entsprechend einem Abstand zwischen dem ersten Fahrzeug (10) und dem zweiten Fahrzeug (20), der zweiten Geschwindigkeit und der geplanten Überholdauer (630) und zum Bestimmen einer Soll-Überholstrecke entsprechend der ersten Überholstrecke (230) und
ein Geschwindigkeitsplanungsmodul (940) zum Bestimmen der geplanten Geschwindigkeit entsprechend der Soll-Überholstrecke und der geplanten Überholdauer und zum Steuern des ersten Fahrzeugs entsprechend der geplanten Geschwindigkeit.

8. Computerlesbares Speichermedium, auf dem ein Computerprogramm mit Anweisungen gespeichert ist, die, wenn das Programm von einem Prozessor ausgeführt wird, diesen dazu veranlassen, das Verfahren nach einem der Ansprüche 1 bis 6 zu implementieren.

## Revendications

1. Procédé de planification de dépassement appliqué à un premier véhicule (10), comprenant les étapes suivantes consistant à :
acquérir une première vitesse du premier véhicule (10), une seconde vitesse d'un deuxième véhicule (20) et une distance entre le premier véhicule (10) et le deuxième véhicule (20) (210, 610), le deuxième véhicule (20) étant le véhicule que le premier véhicule (10) doit dépasser ;
le procédé étant **caractérisé par** les étapes consistant à :
déterminer un temps de dépassement planifié selon la première vitesse et une différence de vitesse entre la première vitesse et la seconde vitesse (220, 620) ;
calculer une première distance de dépassement selon la distance entre le premier véhicule (10) et le deuxième véhicule (20), la seconde vitesse et le temps de dépassement planifié (230, 630) ;
déterminer une distance de dépassement cible selon la première distance de dépassement (230) ;
déterminer une vitesse planifiée selon la distance de dépassement cible et le temps de dépassement planifié ; et
commander le premier véhicule (10) selon la vitesse planifiée.

2. Procédé selon la revendication 1, dans lequel l'étape consistant à déterminer le temps de dépassement planifié selon la première vitesse et la différence de vitesse entre la première vitesse et la seconde vitesse (220, 620) comprend les étapes consistant à :
déterminer un premier temps selon une plage de vitesse dans laquelle se situe la première vitesse, la plage de vitesse comprenant une première plage de vitesse, une deuxième plage de vitesse et une troisième plage de vitesse,
si la première vitesse se situe dans la première plage de vitesse, le premier temps étant déterminé comme étant un premier seuil de temps,
si la première vitesse se situe dans la deuxième plage de vitesse, le premier temps étant déterminé comme étant corrélé négativement à la première vitesse,
si la première vitesse se situe dans la troisième plage de vitesse, le premier temps étant déterminé comme étant un second seuil de temps ;
déterminer un second temps selon une plage de différence de vitesse dans laquelle se situe la différence de vitesse entre la première vitesse et la seconde vitesse, la plage de différence de vitesse comprenant une première plage de différence de vitesse, une deuxième plage de différence de vitesse et une troisième plage de différence de vitesse,
si la différence de vitesse entre la première vitesse et la seconde vitesse se situe dans la première plage de différence de vitesse, le second temps étant déterminé comme étant le premier seuil de temps,
si la différence de vitesse entre la première vitesse et la seconde vitesse se situe dans la deuxième plage de différence de vitesse, le second temps étant déterminé comme étant corrélé négativement à la première différence de vitesse,
si la différence de vitesse entre la première vitesse et la seconde vitesse se situe dans la troisième plage de différence de vitesse, le second temps étant déterminé comme étant le second seuil de temps ; et
fixer le temps de dépassement planifié comme étant le plus petit temps entre le premier temps et le second temps.

3. Procédé selon la revendication 1, dans lequel la première distance de dépassement est une somme d'une distance de déplacement du deuxième véhicule (20) et d'une distance de dépassement, la distance de déplacement du deuxième véhicule (20) est le produit du temps de dépassement planifié et de la seconde vitesse, et la distance de dépassement est une distance entre le premier véhicule (10) et le deuxième véhicule (20).

4. Procédé selon la revendication 1, dans lequel l'étape consistant à déterminer la distance de dépassement cible selon la première distance de dépassement (230) comprend les étapes consistant à :
si un troisième véhicule (30) est détecté, calculer une deuxième distance de dépassement selon une distance entre le premier véhicule (10) et le troisième véhicule (30), un temps de suivi et la première vitesse (650), le troisième véhicule (30) étant un véhicule situé devant le premier véhicule (10) après que le premier véhicule (10) a dépassé le deuxième véhicule (20) (640) ;
si un troisième véhicule (30) n'est pas détecté, fixer la première distance de dépassement comme étant la distance de dépassement cible ;
calculer une troisième distance de dépassement selon la distance entre le premier véhicule (10) et le troisième véhicule (30) et la distance entre le premier véhicule (10) et le deuxième véhicule (20) (660) ; et
fixer la distance de dépassement cible comme étant la plus petite distance entre la première distance de dépassement, la deuxième distance de dépassement et la troisième distance de dépassement (670).

5. Procédé selon la revendication 4, dans lequel l'étape consistant à calculer la deuxième distance de dépassement selon la distance entre le premier véhicule (10) et le troisième véhicule (30), le temps de suivi et la première vitesse si le troisième véhicule (30) est détecté (650) comprend les étapes consistant à :
si le troisième véhicule est détecté, acquérir un temps de suivi prédéfini (710) ;
calculer un produit du temps de suivi prédéfini et de la première vitesse ; et
fixer la deuxième distance de dépassement comme étant la différence entre la distance entre le premier véhicule (10) et le troisième véhicule (30) et le produit du temps de suivi prédéfini et de la première vitesse (720).

6. Procédé selon la revendication 4, dans lequel l'étape consistant à calculer la troisième distance de dépassement selon la distance entre le premier véhicule (10) et le troisième véhicule (30) et la distance entre le premier véhicule (10) et le deuxième véhicule (20) comprend les étapes consistant à :
acquérir des paramètres de pondération prédéfinis comprenant un premier paramètre de pondération et un second paramètre de pondération (810) ; et
calculer un produit du premier paramètre de pondération et de la distance entre le premier véhicule (10) et le deuxième véhicule (20), calculer un produit du second paramètre de pondération et de la distance entre le premier véhicule (10) et le troisième véhicule (30) et fixer la troisième distance de dépassement comme étant une somme de deux produits (820).

7. Appareil de planification de dépassement (900), l'appareil (900) comprenant :
un module d'acquisition de données (910) permettant d'acquérir une première vitesse d'un premier véhicule (10), une seconde vitesse d'un deuxième véhicule (20) et une distance entre le premier véhicule (10) et le deuxième véhicule (20) (210, 610) ;
l'appareil étant **caractérisé par** :
un module de planification de temps (920) permettant de déterminer un temps de dépassement planifié selon la première vitesse et une différence de vitesse entre la première vitesse et la seconde vitesse (220, 620) ;
un module de planification de distance (930) permettant de calculer une première distance de dépassement selon une distance entre le premier véhicule (10) et le deuxième véhicule (20), la seconde vitesse et le temps de dépassement planifié (630), et de déterminer une distance de dépassement cible selon la première distance de dépassement (230) ; et
un module de planification de vitesse (940) permettant de déterminer la vitesse planifiée selon la distance de dépassement cible et le temps de dépassement planifié, et de commander le premier véhicule selon la vitesse planifiée.

8. Support de stockage lisible par ordinateur sur lequel est stocké un programme informatique comprenant des instructions qui, lorsque le programme est exécuté par un processeur, amènent le processeur à mettre en œuvre le procédé selon l'une quelconque des revendications 1 à 6.
